Europäisches Patentamt

European Patent Office

Office européen des brevets

(19)

(11) Veröffentlichungsnummer: **0 282 141**
**A2**

(12) ## EUROPÄISCHE PATENTANMELDUNG

(21) Anmeldenummer: **88200440.1**

(22) Anmeldetag: **08.03.88**

(51) Int. Cl.⁴: **H04N 5/46**

(30) Priorität: **12.03.87 DE 3707933**

(43) Veröffentlichungstag der Anmeldung:
**14.09.88 Patentblatt 88/37**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Schwarz, Henning**
**Cronsberg 18**
**D-2057 Reinbek(DE)**

(74) Vertreter: **Peters, Carl Heinrich, Dipl.-Ing. et al**
**Philips Patentverwaltung GmbH**
**Wendenstrasse 35 Postfach 10 51 49**
**D-2000 Hamburg 1(DE)**

(54) **Verstärkeranordnung.**

(57) Eine Verstärkeranordnung zum Gewinnen einer Vergleichsschwingung aus einem modulierten Signal zum Umsetzen desselben in einem Synchrondemodulator, ermöglicht bei kompaktem Aufbau dadurch eine optimale Erzeugung unterschiedlicher Signale, daß sie zum Anpassen an das Umsetzen unterschiedlicher Signale zwischen wenigstens zwei verschiedenen Übertragungscharakteristiken umschaltbar ausgebildet ist.

FIG.1

EP 0 282 141 A2

## Verstärkeranordnung

Die Erfindung bezieht sich auf eine Verstärkeranordnung zur Trägeraufbereitung in einer Schaltungsanordnung zur Synchrondemodulation der Tonsignale in einem Mehrnormen-Fernsehempfangsgerät.

Aus der Zeitschrift "Fernseh-und Kinotechnik", 40. Jahrgang, Nr. 5, 1986, Seite 198, insbesondere Bild 8 mit zugehöriger Beschreibung, ist eine Ton-ZF-Schaltung für Mehrnormen-Betrieb bekannt. Diese umfaßt eine Trägeraufbereitung, die ein aufbereitetes Trägersignal unter einem Phasenwinkel von 0° einem Multiplizierer zuführt, dem weiterhin von einem steuerbaren Verstärker unmittelbar ein Ton-ZF-Signal zugeleitet wird. Vom Multiplizierer wird ein Signal einerseits über einen Verstärker als "AM-Ton" und andererseits über einen AGC-Detektor als Steuersignal an den steuerbaren Verstärker weitergeleitet. Außerdem gibt die Trägeraufbereitung ein aufbereitetes Trägersignal unter einem Phasenwinkel von 90° an einen zweiten Multiplizierer ab, dem ebenfalls das Ton-ZF-Signal zugeleitet wird und der über einen weiteren Verstärker einen Differenz-Tonträger liefert.

Die beschriebene Schaltung hat den Vorteil, daß die Trägeraufbereitung ein aufbereitetes Trägersignal für drei verschiedene Verwendungszwecke liefert. Dadurch kann eine Einsparung von Bauteilen erreicht werden. Des weiteren dient der erstgenannte Multiplizierer zum Liefern sowohl des "AM-Tons" als auch zum Liefern eines Signales für den AGC-Detektor, so daß auch hierdurch ein bauteilesparender Aufbau ermöglicht ist.

Es hat sich nun herausgestellt, daß bei einem Aufbau gemäß "Fernseh-und Kinotechnik" eine optimale Erzeugung sowohl des Steuersignales für den steuerbaren Verstärker als auch des "AM-Tones" und schließlich des Differenz-Tonträgers nicht im gewünschten Maß möglich ist, wenn diese stark unterschiedlichen Signale mit unterschiedlichen Anforderungen aus einer für alle Signale gleichen Schaltung abgeleitet werden.

Die Erfindung hat die Aufgabe, unter Beibehaltung der Vorteile der bekannten Schaltung, nämlich des kompakten Aufbaus, eine Anordnung zu - schaffen, die trotzdem eine optimale Erzeugung der beschriebenen unterschiedlichen Signale ermöglicht.

Die Aufgabe wird erfindungsgemäß durch eine Verstärkeranordnung gelöst, die zum Anpassen an das Umsetzen der Tonsignale unterschiedlicher Normen zwischen zwei verschiedenen Übertragungscharakteristiken umschaltbar ausgebildet ist.

Der Erfindung liegt die Erkenntnis zugrunde, daß eine optimale Erzeugung aller gewünschten Signale bei der Schaltung nach "Fernseh-und Kinotechnik" dadurch erreicht werden kann, daß die Trägeraufbereitung den unterschiedlichen Anforderungen der Signale angepaßt wird. In der Trägeraufbereitung ist in der Regel eine Verstärkeranordnung enthalten, die das Ton-ZF-Signal verstärkt, um daraus eine dem Trägersignal entsprechende Vergleichsschwingung abzuleiten.

Die erfindungsgemäße Verstärkeranordnung ermöglicht die Beibehaltung der Schaltungsstruktur nach "Fernseh-und Kinotechnik", d. h. einen einfachen und platzsparenden Aufbau und insbesondere die Einsparung eines Multiplizie rers, bei gleichzeitig verbesserten Schaltungseigenschaften. Da bei einer Mehrnormen-Empfangsanordnung jeweils nur eine Vergleichsschwingung benötigt wird, kann die erfindungsgemäße Verstärkeranordnung in vorteilhafter Weise einen Schaltungsaufbau ersetzen, der zu jedem der zu erzeugenden Signale eine gesonderte Trägeraufbereitung aufweist, von denen dann nur jeweils eine zur Zeit im Betrieb ist.

In einer Weiterbildung umfaßt die erfindungsgemäße Verstärkeranordnung bezüglich ihrer Eingangs-und Ausgangsanschlüsse parallelgeschaltete Verstärkerstufen, die die unterschiedlichen Übertragungscharakteristiken aufweisen und durch Verbinden mit einem Stromversorgungsanschluß und/oder Masse wahlweise in einen wirksamen oder einen unwirksamen Zustand überführbar sind.

Wenn die Verstärkeranordnung mehrstufig ausgeführt ist, wird die Übertragungscharakteristik nur durch jeweils eine Stufe bestimmt, so daß die übrigen, bezüglich der Übertragungscharakteristik neutralen Verstärkerstufen nur einfach ausgeführt sein können. Die wahlweise wirksamen Verstärkerstufen können für Signale verschiedener Frequenzen oder auch mit linearen oder verschiedenen nichtlinearen Übertragungscharakteristiken ausgebildet sein. In einem bevorzugten Fall handelt es sich dabei um Differenzverstärkerstufen, beispielsweise gebildet durch ein emittergekoppeltes Transistorenpaar. Durch die beschriebene Ausbildung der Verstärkeranordnung wird außerdem ein Schalten von Verbindungen im Signalweg vermieden, was zu einem guten Signalübertragungsverhalten beiträgt.

Die Verstärkerstufen können für die einzelnen Übertragungscharakteristiken unterschiedlich aufgebaut sein, insbesondere umfassen sie unterschiedliche Last-und/oder Gegenkopplungsimpedanzen zur Bildung der Übertragungscharakteristiken. Die Last und Gegenkopplungsimpedanzen sind bevorzugt wahlweise linear oder in verschiedener Weise nichtlinear ausgebildet.

Grundsätzlich können die Verstärkerstufen für die einzelnen Übertragungscharakteristiken unterschiedliche Verstärkungselemente in unterschiedlicher Zusammenschaltung enthalten, was beispielsweise bei der Verarbeitung unterschiedlicher Signalfrequenzen vorteilhaft sein kann. Anderenfalls wird ein besonders einfacher Aufbau durch lediglich eine Verstärkerstufe erreicht, die wahlweise mit unterschiedlichen Last-und Gegenkopplungsimpedanzen zum Erzielen unterschiedlicher Übertragungscharakteristiken verbindbar ist. Hierbei können Last-und Gegenkopplungsimpedanzen beliebig kombiniert oder auch nur teilweise vorgesehen sein, so daß beispielsweise die Verstärkung durch Wahl der Gegenkopplungsimpedanz oder ein nichtlinearer Verlauf der Übertragungscharakteristik durch eine bestimmte Lastimpedanz erzeugt werden kann. Aussteuerungs-oder frequenzabhängige Impedanzen lassen sich beliebig kombinieren. Der Mehraufwand für eine unterschiedliche Übertragungscharakteristik der gesamten Verstärkeranordnung reduziert sich damit auf eine oder mehrere um- oder zuschaltbare Impedanzen. Die Verstärkerstufe kann bevorzugt als Differenzverstärker ausgebildet sein.

Weitere vorteilhafte Ausgestaltungen sind in den übrigen Unteransprüchen beschrieben.

Einige Ausführungsbeispiele der Erfindung sind in der Zeichnung dargestellt und werden im nachfolgenden näher beschrieben. Es zeigen

Fig. 1 und 2 zwei Ausführungsbeispiele von Teilschaltungen einer erfindungsgemäßen Verstärkeranordnung,

Fig. 3 ein Beispiel einer erfindungsgemäßen Verstärkeranordnung mit einem Multiplizierer für eine Mehrnormen-Empfangsanordnung.

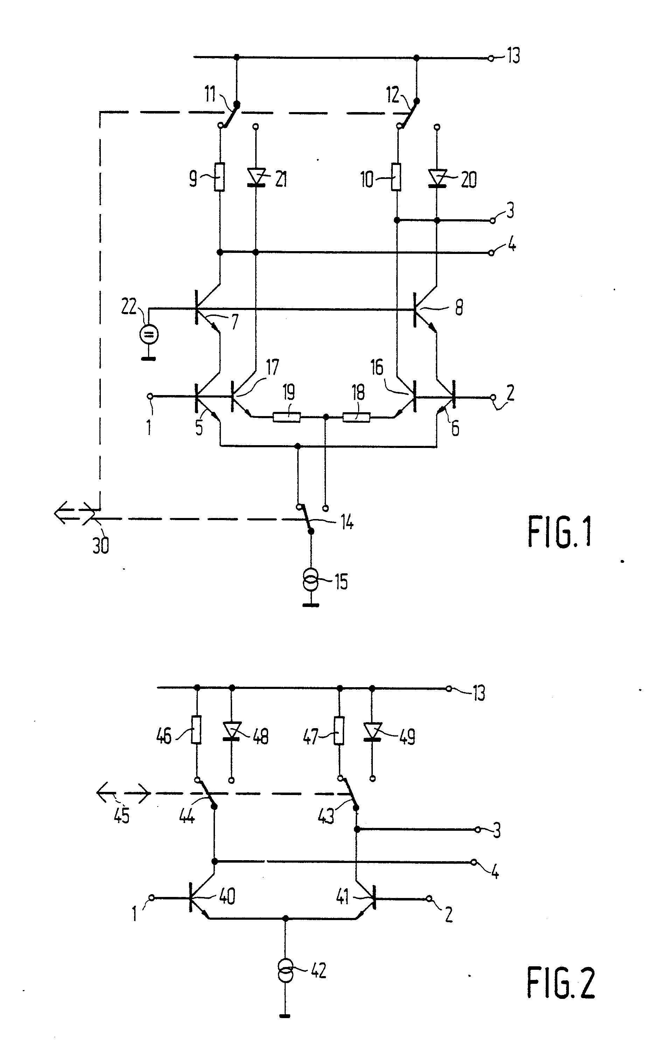

Fig. 1 zeigt eine Verstärkeranordnung mit zwei Verstärkerstufen, die bezüglich ihrer Eingangsanschlüsse 1, 2 und ihrer Ausgangsanschlüsse 3, 4 parallel geschaltet sind. Dabei umfaßt eine erste Verstärkerstufe einen Differenzverstärker mit zwei emittergekoppelten Transistoren 5, 6 sowie eine Kaskodestufe, die aus je einem Transistor 7 bzw. 8 besteht, die mit ihren Hauptstrompfaden zu den Hauptstrompfaden der Transistoren 5, 6 des Differenzverstärkers in Reihe geschaltet sind. In Reihe zu diesen Hauptstrompfaden liegt ferner je ein Widerstand 9, 10, der über je einen Umschalter 11 bzw. 12 mit einem Stromversorgungsanschluß 13 verbunden ist. Die Emitteranschlüsse der Transistoren 5, 6 des Differenzverstärkers sind über einen dritten Umschalter 14 an eine gegen Masse geschaltete Stromquelle 15 geführt. In der gezeichneten Stellung der Umschalter 11, 12, 14, die über eine durch eine gestrichelte Linie angedeutete Steuerleitung 30 betätigt werden, ist die erste Verstärkerstufe mit dem Stromversorgungsanschluß und Masse verbunden und damit in den wirksamen Zustand geschaltet.

Die Verstärkeranordnung nach Fig. 1 enthält weiterhin eine zweite Verstärkerstufe mit einem weiteren Paar von Transistoren 16, 17, deren Emitteranschlüsse über je einen Emitterwiderstand 18 bzw. 19 zur Rückkopplung ebenfalls mit dem dritten Umschalter 14 derart verbunden sind, daß durch diesen die Stromquelle 15 wahlweise mit dem Transi storenpaar 5, 6 oder dem Transitorenpaar 16, 17 verbunden werden kann. Die zweite Verstärkerstufe umfaßt weiterhin zwei Dioden 20, 21, die in Reihe zu den Hauptstrompfaden der Transitoren 16 bzw. 17 zwischen deren Kollektoranschlüsse und die Umschalter 11 bzw. 12 eingefügt sind. Die Umschalter 11 bzw. 12 sind derart angeordnet, daß sie jeweils einen der Anschlüsse der Widerstände 9, 10 oder der Dioden 20, 21 mit dem Stromversorgungsanschluß 13 verbinden, und die anderen Anschlüsse der Widerstände 9 - bzw. 10 und der Dioden 20 bzw. 21 sind paarweise mit den Ausgangsanschlüssen 3 bzw. 4 verbunden.

Während in der in Fig. 1 gezeigten Stellung der Umschalter 11, 12, 14 nur der als erste Verstärkerstufe bezeichnete Teil der gesamten Verstärkeranordnung wirksam ist, wird bei Umschalten der Umschalter 11, 12, 14 über die Steuerleitung 30 in die jeweils nicht gezeichnete Stellung die erste Verstärkerstufe unwirksam und gleichzeitig der als zweite Verstärkerstufe bezeichnete Teil der Verstärkeranordnung in den wirksamen Zustand geschaltet. Die erste Verstärkerstufe ist als Hochfrequenzverstärker mit hohem Verstärkungsfaktor und amplitudenbegrenzender Funktion ausgebildet. Dazu sind die Emitteranschlüsse der Transitoren 5 und 6 unmittelbar miteinander gekoppelt und zur Erhöhung der Verstärkung bei hohen Frequenzen die Kaskodestufe eingefügt, deren Transitoren 7 und 8 mit ihren Steueranschlüssen miteinander und mit einer gegen Masse geschalteten Gleichspannungsquelle 22 verbunden sind. Als Lastimpedanzen der ersten Verstärkerstufe dienen die ohmschen Widerstände 9, 10, die ebenfalls eine hohe Spannungsverstärkung zwischen den Eingangsanschlüssen 1, 2 und den Ausgangsanschlüssen 3, 4 bewirken. Durch die Kennlinien der Transistoren 5, 6 des (ersten) Differenzverstärkers und durch die Spannungsbegrenzung bei größeren Amplituden in der Spannung zwischen den Eingangsanschlüssen 1 und 2 erhält die erste Verstärkerstufe eine nichtlineare Übertragungscharakteristik. Sie wird bevorzugt für einen Begrenzer zum Abtrennen einer Modulationsspannung von einem amplitudenmodulierten Trägersignal eingesetzt.

In der zweiten Verstärkerstufe bewirken die Emitterwiderstände 18, 19 eine Linearisierung der Übertragungscharakteristik des aus den Transistoren 16, 17 gebildeten zweiten Differenzverstärkers.

Damit werden die Ströme in den Hauptstrompfaden der Transitoren 16, 17 in einem weiten Aussteuerungsbereich im wesentlichen proportional zur Spannung zwischen den Eingangsanschlüssen 1 und 2. Durch die Kennlinien der Dioden 20, 21 entsteht nun zwischen den Ausgangsanschlüssen 3 und 4 eine Spannung, die proportional zum natürlichen Logarithmus der Eingangsspannung ist. Durch Einsatz der Dioden 20, 21 als Last-impedanzen und der Emitterwiderstände 18, 19 als Gegenkopplungsimpedanzen ist damit eine bestimmte Übertragungscharakteristik der zweiten Verstärkerstufe eingestellt.

Über die Steuerleitung 30 können weiterhin beliebige Kombinationen der Schaltstellungen der Umschalter 11, 12, 14 eingestellt werden. Damit lassen sich die verstärkenden Elemente der Verstärkeranordnung nach Fig. 1, also die Differenzverstärker und die Kaskodestufe, die Last-und die Gegenkopplungsimpedanzen auch noch in anderer Weise kombinieren, so daß weitere Übertragungscharakteristiken einstellbar sind. Die gezeigte Verstärkeranordnung ist damit bei lediglich geringem Mehraufwand gegenüber einem einfach beschalteten Differenzverstärker sehr vielseitig einsetzbar.

Fig. 2 zeigt eine andere, noch einfachere Ausführungsform der Erfindung. Sie besteht aus einem Differenzverstärker mit zwei Transistoren 40, 41, deren Emitteranschlüsse gemeinsam über eine Stromquelle 42 gegen Masse geschaltet sind. Die Steueranschlüsse der Transistoren 40, 41 bilden die Eingangsanschlüsse 1 und 2, ihre Kollektoranschlüsse die Ausgangsanschlüsse 3, 4. Diese sind weiterhin über Umschalter 43 bzw. 44, die über eine Steuerleitung 45 betätigt werden, wahlweise je mit einem Anschluß eines Widerstandes 46 bzw. 47 oder einer Diode 48 bzw. 49 verbindbar, deren jeweils andere · Anschlüsse alle mit dem Versorgungsspannungsanschluß 13 verbunden sind.

Die Verstärkeranordnung nach Fig. 2 bildet einen einfachen Differenzverstärker ohne Rückkopplung, d. h. mit hoher Verstärkung. In der gezeichneten Stellung der Umschalter 43, 44 entspricht sie einer Variante der ersten Verstärkerstufe aus Fig. 1 und unter Weglassen der Kaskodestufe 7, 8, d. h. für niedrigere Frequenzen. Werden dagegen die Dioden 48, 49 über die Umschalter 43, 44 mit den Kollektoranschlüssen der Transistoren 40, 41 verbunden, ergibt sich eine Verstärkeranordnung, wie sie die zweite Verstärkerstufe in Fig. 1 ohne die eine Rückkopplung bildenden Emitterwiderstände 18, 19 darstellt. Bei dieser Anordnung bleibt in jedem Fall der Zusammenhang zwischen den Strömen in den Hauptstrompfaden der Transistoren 40, 41 und der Spannung zwischen den Eingangsanschlüssen 1, 2 unverändert; über die Umschalter 43, 44 wird dagegen der Zusammenhang zwischen den Strömen in den Transistoren 40, 41 und den Spannungen an den Kollektoranschlüssen und damit der Spannung zwischen den Ausgangsanschlüssen 3, 4 zur Variation der Übertragungscharakteristik verändert. Diese Variation kann wieder derart erfolgen, daß wahlweise einer der Transistoren 40 bzw. 41 mit einer Diode 48 bzw. 49 und der andere Transistor mit einem Widerstand 46 bzw. 47 verbunden wird.

Die Widerstände 46, 47 und die Dioden 48, 49 sind wie die entsprechenden Elemente in Fig. 1 nur beispielhaft gewählt. An ihrer Stelle oder zusätzlich zu ihnen können z. B. auch frequenzabhängige Impedanzen vorgesehen sein.

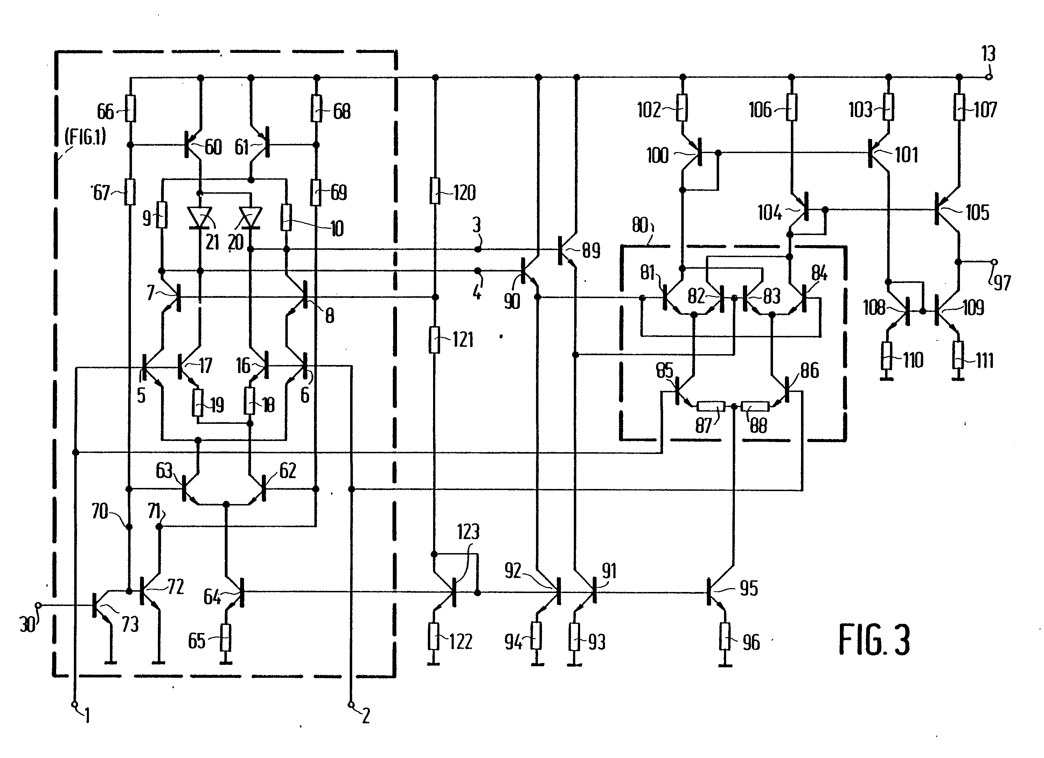

Fig. 3 zeigt ein detailliertes Schaltbild einer Verstärkeranordnung nach Fig. 1, die zur Trägeraufbereitung in einer Schaltungsanordnung zur Synchrondemodulation, beispielsweise der Tonsignale in einem Mehrnormen-Fernsehempfangsgerät, verwendet wird. Mit Fig. 1 übereinstimmende Schaltungselemente sind mit identischen Bezugszeichen versehen. Während die erste und die zweite Verstärkerstufe aus Fig. 1 unverändert übernommen sind, sind die dort - schematisch gezeichneten Umschalter 11, 12, 14 in Fig. 3 als Transistorschaltungen dargestellt, wie sie beispielsweise in einem integrierten Schaltkreis aufgebaut werden können. Die Umschalter 11, 12, werden durch zwei Transistoren 60, 61 gebildet, durch die wahlweise die Dioden 20, 21 oder die Widerstände 9, 10 mit dem Stromversorgungsanschluß 13 verbunden werden. Entsprechend ist der Umschalter 14 durch ein emittergekoppeltes Transistorenpaar 62, 63 dargestellt, dessen Kollektoranschlüsse mit dem ersten bzw. dem zweiten Differenzverstärker 5, 6 bzw. 16, 17 und dessen Emitteranschlüsse mit dem Kollektoranschluß eines Transistors 64 verbunden sind, dessen Hauptstrompfad in Reihe mit einem Widerstand 65 die Stromquelle 15 bildet. Die Steueranschlüsse der die Umschalter bildenden Transistoren 60 bis 63 sind über Widerstandsspannungsteiler 66, 67 und 68, 69 zwischen den Stromversorgungsanschluß 13 und die Ausgangsanschlüsse 70, 71 eines zweistufigen Steuersignaltreibers aus zwei Transistoren 72, 73 geschaltet. Über den Steuersignaltreiber 72, 73 werden die Umschalter von der Steuerleitung 30 betätigt.

Die beschriebene Verstärkeranordnung ist mit einem Vierquadranten-Multiplizierer 80 verbunden, der in an sich üblicher Weise aus zwei über kreuz gekoppelten Transistorpaaren 81, 82 und 83, 84 besteht, deren paarweise gekoppelte Emitteranschlüsse über eine Differenzverstärker-Treiberstufe aus zwei Transistoren 85, 86 und zwei linearisierenden Emitterwiderständen 87, 88 das Signal von den Eingangsanschlüssen 1, 2 der Verstärkeranordnung zugeführt erhalten, während den paarweise gekoppelten Steueranschlüssen der Transistorpaare 81, 82 bzw. 83, 84 das Signal von den Ausgangsanschlüssen 3, 4 der Verstärkeranordnung zugeführt wird, und zwar über zwei Emitterfolger-Transistoren 89, 90 zur Impedanzanpassung und rückwirkungsfreien Kopplung zwischen der Verstärkeranordnung und dem Multiplizierer 80. Die Hauptstrompfade der Emitterfolger-Transistoren 89, 90 sind mit dem Hauptstrompfad eines Stromquellentransistors 91 bzw. 92 und einem Widerstand 93 bzw. 94 zur Energiespeisung zwischen dem Stromversorgungsanschluß 13 und Masse in Reihe geschaltet. Entsprechend ist eine aus, einem Transistor 95 und einem Widerstand 96 bestehende Stromquelle zwischen den Verbindungspunkt der Emitterwiderstände 87, 88 und Masse eingefügt.

Von den über kreuz gekoppelten Kollektoranschlüssen der Transistorpaare 81, 82 bzw. 83, 84 werden die im Multiplizierer 80 verknüpften Signale über drei Stromspiegel einem Demodulatorausgang 97 zugeführt und dort so überlagert, daß die gezeigte Schaltungsanordnung dort die Differenz der Ströme an den über kreuz gekoppelten Kollektoranschlüssen der Transistorpaare 81, 82 und 83, 84 abgibt. Diese Differenz entspricht dem Produkt aus dem Signal an den Eingangsanschlüssen 1, 2 und dem Signal an den Ausgangsanschlüssen 3, 4 der Verstärkeranordnung. Die Stromspiegel sind dabei in an sich üblicher Weise aus mit ihren Steueranschlüssen verbundenen Transistoren 100, 101 bzw. 104, 105 bzw. 108, 109 gebildet, von denen jeweils der den Eingang bildende Transistor 100 bzw. 104 bzw. 108 bezüglich seines Steuer-und Kollektoranschlusses kurzgeschlossen ist. In die Emitterzweige der Transistoren 100, 101 bzw. 104, 105 bzw. 108, 109 sind Widerstände 102, 103 bzw. 106, 107 bzw. 110, 111 geschaltet.

Die Stromquellentransitoren 64, 91, 92, 95 sind mit ihren Steueranschlüssen an einen Spannungsteiler aus drei Widerständen 120, 121 und 122 und einem als Diode geschalteten Transistor 123 angeschlossen und bilden mit diesem einen Stromspiegel derart, daß der Strom im Spannungsteiler 120 bis 123 die Ströme in den Stromquellentransistoren 64, 91, 92, 95 bestimmt. Eine Anzapfung zwischen den Widerständen 120 und 121 liefert außerdem eine Gleichspannung für die Transistoren 7, 8 der Kaskodestufe.

Die Anordnung nach Fig. 3 bildet einen vollständigen Synchrondemodulator insbesondere für amplitudenmodulierte Signale. Durch Umschalten der Verstärkeranordnung über die Steuerleitung 30 wird an den Ausgangsanschlüssen 3, 4 aus einem über die Eingangsanschlüsse 1, 2 zugeführten modulierten Signal mit Hilfe der ersten Verstärkerstufe 5 bis 10 durch Verstärkung und Amplitudenbegrenzung das Trägersignal gewonnen und im Multiplizierer 80 mit dem modulierten Signal gemischt. Dabei entsteht am Demodulatorausgang 97 unmittelbar das demodulierte Signal.

Durch Umschalten der Verstärkeranordnung auf die zweite Verstärkerstufe 16 bis 21 wird zusammen mit den Kennlinien der Emitterfolger-Transistoren dem Multiplizierer 80 an den gekoppelten Steueranschlüssen ein unverzerrtes, d. h. amplitudenlinear verstärktes, moduliertes Signal (von den Eingangsanschlüssen 1, 2) zugeleitet, das im Multiplizierer 80 mit sich selbst multipliziert wird. Dabei entsteht am Demodulatorausgang 97 neben anderen Mischprodukten eine Gleichspannung bzw. ein Gleichstrom, der bevorzugt zur Verstärkungsregelung nicht dargestellter, das modulierte Signal verstärkender Signalverarbeitungsstufen herangezogen werden kann.

## Ansprüche

1. Verstärkeranordnung zur Trägeraufbereitung in einer Schaltungsanordnung zur Synchrondemodulation der Tonsignale in einem Mehrnormen-Fernsehempfangsgerät, dadurch gekennzeichnet, daß die Verstärkeranordnung zum Anpassen an das Umsetzen der Tonsignale unterschiedlicher Normen zwischen zwei verschiedenen Übertragungscharakteristiken umschaltbar ausgebildet ist.

2. Verstärkeranordnung nach Anspruch 1, gekennzeichnet durch bezüglich ihrer Eingangs-(1, 2) und Ausgangsanschlüsse (3, 4) parallelgeschaltete Verstärkerstufen (5 bis 10 bzw. 16 bis 21), die die unterschiedlichen Übertragungscharakteristiken aufweisen und durch Verbinden mit einem Stromversorgungsanschluß (13) und/oder Masse wahlweise in einen wirksamen oder einen unwirksamen Zustand überführbar sind.

3. Verstärkeranordnung nach Anspruch 2, dadurch gekennzeichnet, daß die einzelnen Verstärkerstufen (5 bis 10 bzw. 16 bis 21) unterschiedliche Last-(9, 10, 20, 21) und Gegenkopplungsimpedanzen (18, 19) zur Bildung der Übertragungscharakteristiken umfassen.

4. Verstärkeranordnung nach Anspruch 1, gekennzeichnet durch eine Verstärkerstufe (40, 41), die wahlweise mit unterschiedlichen Last-(46 bis 49) und Gegenkopplungsimpedanzen zum Erzielen unterschiedlicher Übertragungscharakteristiken verbindbar ist.

5. Verstärkeranordnung nach Anspruch 3 oder 4, dadurch gekennzeichnet, daß als Lastimpedanzen (9, 10, 20, 21 bzw. 46 bis 49) für eine erste Übertragungscharakteristik ohmsche Widerstände (9, 10, 46, 47) und für eine zweite Übertragungscharakteristik Dioden (20, 21, 48, 49) und daß als Gegenkopplungsimpedanzen für die zweite Übertragungscharakteristik ohmsche Widerstände (18, 19) vorgesehen sind.

0 282 141

FIG.1

FIG.2

1-II-PHD 87-050

FIG.3